# EUROPÄISCHE PATENTSCHRIFT

(11) **EP 2 763 877 B1**
(45) Veröffentlichungstag und Bekanntmachung des Hinweises auf die Patenterteilung: **06.04.2016**
(21) Anmeldenummer: 12766972.9
(22) Anmeldetag: 01.10.2012
(51) Int. Cl.: B60T 17/08

(54) **KOMBINIERTER BETRIEBSBREMS- UND FEDERSPEICHERBREMSZYLINDER MIT BAJONETTVERSCHLUSS**
COMBINED SERVICE BRAKE CYLINDER AND SPRING BRAKE CYLINDER HAVING A BAYONET COUPLING
CYLINDRE COMBINÉ DE FREIN DE SERVICE ET DE FREIN À ACCUMULATEUR À JOINT À BAÏONNETTE

(30) Priorität: 07.10.2011 DE 102011115122
(43) Veröffentlichungstag der Anmeldung: 13.08.2014
(73) Patentinhaber: KNORR-BREMSE Systeme für Nutzfahrzeuge GmbH, 80809 München (DE)
(72) Erfinder: DEROUAULT, Sylvain, F-14100 Hermival les Vaux (FR)
(86) Internationale Anmeldenummer: PCT/EP2012/069371
(87) Internationale Veröffentlichungsnummer: WO 2013/050329

(56) Entgegenhaltungen:
- DE-A1- 4 011 739
- DE-A1- 4 135 943

## Beschreibung

### Stand der Technik

Die Erfindung betrifft einen kombinierten Betriebsbrems- und Federspeicherbremszylinder für Bremsanlagen von Fahrzeugen gemäß dem Oberbegriff von Patentanspruch 1 sowie ein Verfahren zu dessen Herstellung gemäß Anspruch 8.

Ein gattungsgemäßer kombinierter Betriebsbrems- und Federspeicherbremszylinder ist beispielsweise aus der DE 40 11 739 A1 bekannt, wobei der Bajonettverschluss zwischen dem Federspeicherbremszylinder und der Zwischenwand einen separaten Bajonettring umfasst, welcher mit seinen nach radial innen weisenden Bajonettsegmenten sowohl Verriegelungselemente des Federspeicherbremszylinders als auch Verriegelungssegmente der Zwischenwand übergreift. Dabei ist zwischen der radial inneren Umfangsfläche des die Verriegelungselemente aufweisenden endseitigen Rands des Federspeicherbremszylinders und einer radial inneren Umfangsfläche der Ringkammer eine Ringdichtung angeordnet, welche die be- und entlüftbare Druckkammer gegenüber der Umgebung abdichtet. Die Ringdichtung ist dabei in einer Nut an der radial inneren Umfangsfläche der Ringkammer gehalten.

### Aufgabe der Erfindung

Die Aufgabe der Erfindung besteht demgegenüber darin, einen kombinierten Betriebsbrems- und Federspeicherbremszylinder der eingangs erwähnten Art derart fortzubilden, dass er eine verbesserte Abdichtung der Druckkammer des Federspeicherbremszylinders gewährleistet.

Diese Aufgabe wird durch die Merkmale von Anspruch 1 gelöst. Der nebengeordnete Anspruch 6 gibt ein Verfahren zur Herstellung eines solchen kombinierten Betriebsbrems- und Federspeicherbremszylinders an.

### Offenbarung der Erfindung

Es wird vorgeschlagen, dass eine Ausnehmung im Boden der Ringkammer zur Aufnahme wenigstens eines Endabschnitts der Ringdichtung, sowie an den Verriegelungssegmenten des Federspeicherbremszylinders stirnseitige Kontaktflächen zum Anschlag an der bodenseitigen Anschlagfläche in der Ringkammer vorgesehen sind, wobei wenigstens der Endabschnitt der Ringdichtung zwischen der Ausnehmung im Boden der Ringkammer und dem Rand der Wandung des Federspeicherbremszylinders geklemmt ist.

Das Verfahren zur Herstellung des kombinierten Betriebsbrems- und Federspeicherbremszylinders beinhaltet dann wenigstens die folgenden Schritte:
a) Positionieren der Ringdichtung an der nach radial innen weisenden Umfangsfläche der Ringkammer und des Endabschnitts der Ringdichtung in der Ausnehmung im Boden der Ringkammer,
b) translatorisches Einführen des endseitigen Rands der Wandung des Federspeicherbremszylinders in die Ringkammer der Zwischenwand unter Einführen der Verriegelungssegmente in die korrespondierenden Ausnehmungssegmente bis zum Kontakt der stirnseitigen Kontaktflächen der Verriegelungssegmente des Federspeicherbremszylinders mit der zugeordneten bodenseitigen Anschlagfläche der Ringkammer unter Klemmen wenigstens des Endabschnitts der Ringdichtung zwischen der Ausnehmung im Boden der Ringkammer und dem endseitigen Rand der Wandung des Federspeicherbremszylinders,
c) Verdrehen von Federspeicherspeicherbremszylinder und Zwischenwand gegeneinander derart, dass die nach radial außen vorspringenden Verriegelungselemente des Federspeicherbremszylinders die nach radial innen vorspringenden Verriegelungselemente der Zwischenwand innerhalb der Ringkammer formschlüssig hintergreifen.

Die Ausnehmung im Boden der Ringkammer ermöglicht eine Zentrierung der Ringdichtung vor dem Zusammenfügen von Federspeicherbremszylinder und Zwischenwand in einer definierten Lage. Diese Zentrierung trägt dazu bei, dass die Ringdichtung während der Verriegelung des Bajonettverschlusses durch translatorisches Einführen des Randes der Wandung des Federspeicherbremszylinders nicht aus ihrer definierten Lage verschoben wird.

Weiterhin trägt der Anschlag der stirnseitigen Kontaktflächen an den Verriegelungssegmenten des Federspeicherbremszylinders an der Anschlagfläche am Boden der Ringkammer dazu bei, dass die Ringdichtung beim translatorischen Einführen des Rand der Wandung des Federspeicherbremszylinders nicht übermäßig gequetscht und damit beschädigt wird. Damit wird ein definierter, zur Verfügung stehender Raum für den Endabschnitt der Ringdichtung vorgegeben.

Nicht zuletzt sorgt die durch Kontaktflächen und Anschlagfläche definierte Klemmung der Ringdichtung für eine gewisse Kompression der Ringdichtung und damit für ein verbessertes Dichtverhalten.

Besonders bevorzugt erstrecken sich die Kontaktflächen der Verriegelungssegmente des Federspeicherbremszylinders über den gesamten Segmentbogen und weisen, als axiale Ausnehmungen in einer Stirnfläche des Rands der Wandung des Federspeicherbremszylinders ausgebildet, von dieser einen Abstand von 0,1 bis 0,3 mm auf. Diese in axialer Richtung geringgradigen Ausnehmungen, an denen die Kontaktflächen ausgebildet sind, verhindern ein zu tiefes Eindringen des Rands der Wandung in die Ringkammer und damit eine übermäßige Klemmung und Beschädigung der Ringdichtung.

Weiterhin bevorzugt erstrecken sich die Kontaktflächen der Verriegelungssegmente des Federspeicherbremszylinders in einem Abstand von 2,1 mm bis 2,3 mm von der nach radial innen weisenden Umfangsfläche des Rands der Wandung des Federspeicherbremszylinders gemessen bis zur nach radial außen weisenden Umfangsfläche der Verriegelungssegmente.

Bevorzugt ist dabei die bodenseitige Anschlagfläche in der Ringkammer für die Kontaktflächen der Verriegelungssegmente des Federspeicherbremszylinders in Bezug zur Ausnehmung im Boden der Ringkammer für die Ringdichtung radial außen angeordnet.

Besonders bevorzugt ist die Ringkammer mit der Zwischenwand einstückig ausgebildet. Dann kann auf die Herstellung eines Bajonettrings wie in DE 40 11 739 A1 verzichtet werden, was die Herstellung des kombinierten Betriebsbrems- und Federspeicherbremszylinders vereinfacht.

Gemäß einer Weiterbildung ist die Ringdichtung im Querschnitt knochenartig ausgebildet, mit wulstartig ausgeformten Endabschnitten sowie mit einem demgegenüber eingeschnürten Mittelabschnitt. Dann ist der andere Endabschnitt der Ringdichtung in radialer Richtung zwischen einer nach radial innen weisenden Umfangsfläche des Rands der Wandung des Federspeicherbremszylinders und einer nach radial außen weisenden Umfangsfläche der Ringkammer der Zwischenwand elastisch geklemmt. Dies sorgt für eine Abdichtung und für einen Kraftschluss, der ein Lösen des Bajonettverschlusses behindert.

### Zeichnungen

Nachfolgend soll die Erfindung anhand der Zeichnung beispielhaft dargestellt werden. In der Zeichnung zeigt
- Fig.1: eine Querschnittsdarstellung eines kombinierten Betriebsbrems- und Federspeicherbremszylinders gemäß einer bevorzugten Ausführungsform;
- Fig.2: eine perspektivische Darstellung des kombinierten Betriebsbrems- und Federspeicherbremszylinders von Fig.1 während der Montage eines Bajonettverschlusses;
- Fig.3: eine Querschnittsdarstellung des Bajonettverschlusses;
- Fig.4: eine Querschnittsdarstellung eines Randes der Wandung des Federspeicherbremszylinders mit Verriegelungssegmenten des Bajonettverschlusses.

### Beschreibung des Ausführungsbeispiels

In der nachfolgenden Beschreibung der Ausführungsbeispiele sind gleiche oder gleich wirkende Bauteile und Baugruppen mit den gleichen Bezugszeichen gekennzeichnet.

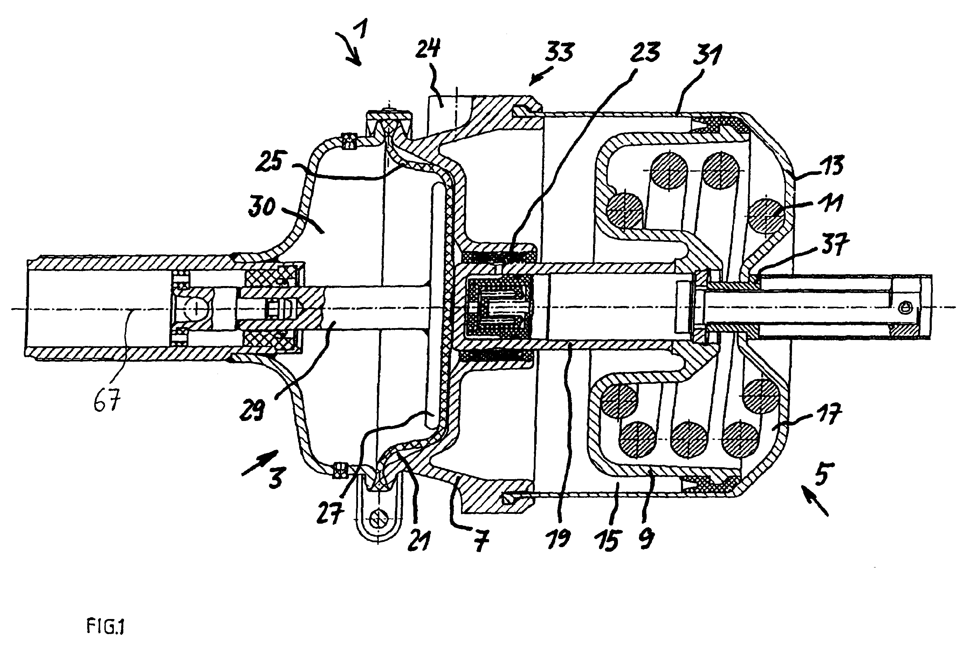

In Fig. 1 der Zeichnung ist zur beispielhaften Erläuterung der Erfindung ein kombinierter Betriebsbrems- und Federspeicherbremszylinder, nachfolgend Kombizylinder 1 genannt, dargestellt. Der Kombizylinder 1 besteht aus einem Betriebsbremszylinder 3 und aus einem mit diesem baulich und funktionell verbundenen Federspeicherbremszylinder 5; der Betriebsbremszylinder und der Federspeicherbremszylinder sind durch eine Zwischenwand 7 voneinander getrennt. Innerhalb des Federspeicherbremszylinders ist ein Kolben 9 verschiebbar angeordnet, wobei an einer Seite des Kolbens 9 eine Speicherfeder 11 anliegt. Die Speicherfeder 11 stützt sich an ihrer entgegen gesetzten Seite am Boden 13 des Federspeicherbremszylinders 5 ab. In die gemäß Fig. 1 links bezüglich des Kolbens 9 bestehende Druckkammer 15 mündet ein (nicht dargestellter) Einlass, durch welchen Druckluft eingeleitet wird, um den Kolben 9 unter Verspannung der Speicherfeder 11 nach rechts gerichtet zu verschieben. Bei dieser Verschiebung des Kolbens wird die Luft, welche innerhalb der die Speicherfeder aufnehmenden Federkammer 17 besteht, z. B. über ein (nicht dargestelltes) Rückschlagventil herausgedrückt. Wird dagegen zum Zwecke der Abbremsung der Druck in der Druckkammer 15 des Federspeicherbremszylinders bei Betätigung eines an sich bekannten, an den Einlass der Druckkammer angeschlossenen Ventils entlastet, dann vermag die Speicherfeder 11 den Kolben 9 gemäß Darstellung in Fig. 1 nach links gerichtet zu verschieben. Der Kolben 9 ist mit einer Kolbenstange 19 verbunden, welche sich durch die Zwischenwand 7 in den Bereich der Druckkammer 21 des Betriebsbremszylinders 3 erstreckt. Eine in der Zwischenwand eingesetzte Dichtung 23 dichtet gegenüber der Außenwand der Kolbenstange während deren Längsbewegungen ab. In die Druckkammer 21 mündet ein Einlass 24, über welchen zum Betätigen des Betriebsbremszylinders Druckluft eingelassen wird. Die Druckluft wirkt auf die innerhalb des Betriebsbremszylinders 3 eingesetzte Membrane 25 ein, an deren entgegen gesetzter Seite ein Druckstück in Form eines Membrantellers 27 vorgesehen ist. Der Membranteller ist mit einer Druckstange 29 verbunden, die sich aus der links bezüglich der Membrane 25 bestehenden Kammer 30 des Betriebsbremszylinders erstreckt und (in nicht dargestellter Weise) mit einem Bremsbetätigungsmechanismus außerhalb des Kombizylinders 1 zusammenwirkt. Hierbei kann es sich beispielsweise um die Betätigungsteile einer Scheibenbremse eines Kraftfahrzeugs handeln. Die Wandung 31 des Federspeicherbremszylinders 5 besteht vorzugsweise aus Stahl oder Aluminium.

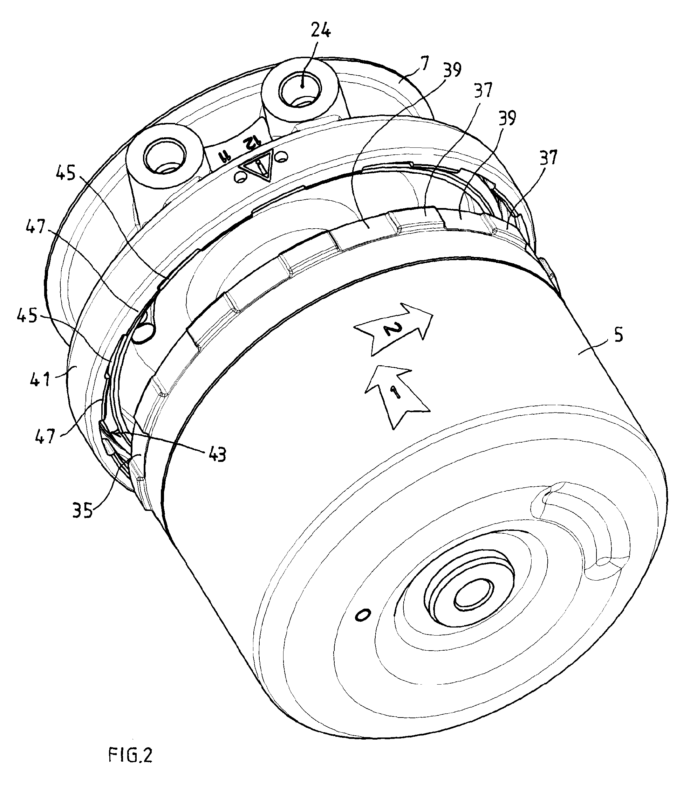

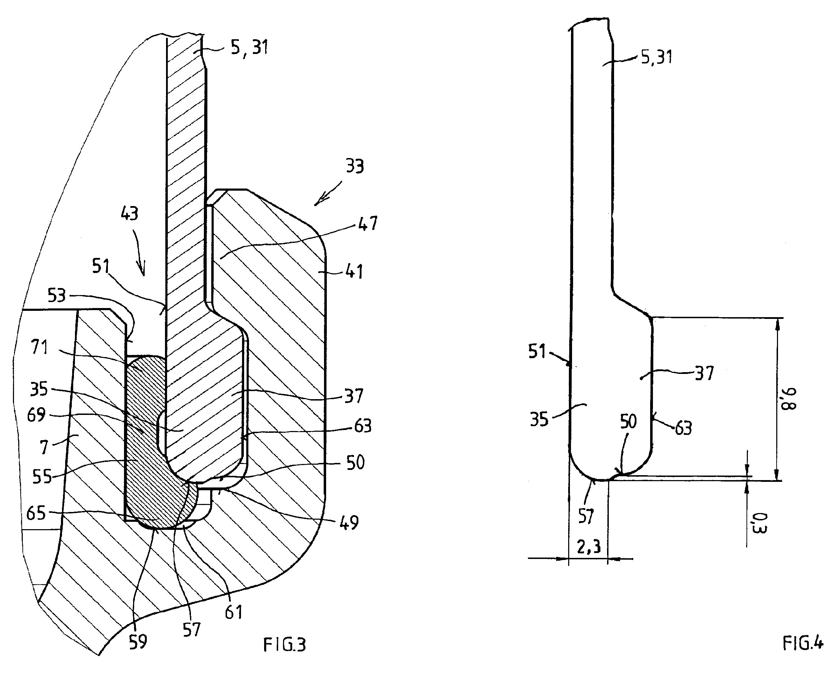

Zur lösbaren Verbindung des Federspeicherbremszylinders 5 mit der Zwischenwand 7 ist ein in Fig.2 und Fig.3 veranschaulichter Bajonettverschluss 33 vorgesehen. Der Bajonettverschluss 33 weist an einem endseitigen Rand 35 der Wandung 31 des Federspeicherbremszylinders 5 nach radial außen vorspringende Verriegelungssegmente 37 und nach radial innen ausgeformte Ausnehmungssegmente 39 sowie hierzu korrespondierende, an einer am endseitigen Rand 41 der Zwischenwand 7 ausgebildeten Ringkammer 43 nach radial außen ausgeformte Ausnehmungssegmente 45 sowie in die Ringkammer 43 nach radial innen vorspringende Verriegelungssegmente 47 auf. Bevorzugt wechseln sich dabei Verriegelungssegmente 37, 47 und Ausnehmungssegmente 39, 45 über den Umfang jeweils lückenlos ab und weisen jeweils die gleiche Segmentbogenlänge auf. Die Verriegelungssegmente 37 und die Ausnehmungssegmente 39 des Federspeicherbremszylinders 5 sind bevorzugt unmittelbar am endseitigen Rand 35 der Wandung 31 angeordnet wie auch die Verriegelungssegmente 47 und die Ausnehmungssegmente 45 der Zwischenwand 7 unmittelbar an deren Rand 41 angeordnet sind.

Weiterhin wirkt eine bodenseitige Anschlagfläche 49 in der Ringkammer 43 als axialer Anschlag für Kontaktflächen 50 der Verriegelungssegmente 37 am endseitigen Rand 35 der Wandung 31 des Federspeicherbremszylinders 5, wenn dieser Rand 35 in die Ringkammer 35 translatorisch eingeführt wird, wie später noch ausführlicher beschrieben wird.

Zur Abdichtung der Druckkammer 15 gegenüber der Umgebung ist eine zwischen der nach radial innen weisenden Umfangsfläche 51 des Rands 35 der Wandung 31 des Federspeicherbremszylinders 5 und der nach radial außen weisende Umfangsfläche 53 der Ringkammer 43 angeordnete Ringdichtung 55 vorgesehen, wie insbesondere in Fig.3 sichtbar ist. Die Ringdichtung 55 ist insbesondere als zylindrischer Ringabschnitt ausgebildet.

Besonders bevorzugt ist die Ringkammer 43 mit dem Rand 41 der Zwischenwand 7 einstückig und als in axialer Richtung stirnseitiger und ringförmiger Einschnitt im endseitigen, zum Rand 35 der Wandung 31 des Federspeicherbremszylinders 5 weisenden Rand 41 der Zwischenwand 7 ausgebildet. Am Boden 59 der Ringkammer 43 ist eine radial innere, ringförmige Ausnehmung 61 ausgebildet. Dabei ist die bodenseitige Anschlagfläche 49 in der Ringkammer 43 in Bezug zu der Ausnehmung 61 im Boden 59 der Ringkammer 43 für die Ringdichtung 55 radial außen angeordnet.

Wie insbesondere aus Fig. 4 hervorgeht, erstrecken sich die Kontaktflächen 50 der Verriegelungssegmente 37 des Federspeicherbremszylinders 5 jeweils über deren gesamte Segmentbogenlänge und weisen, als axiale Ausnehmungen in einer Stirnfläche 57 des Rands 35 der Wandung 31 des Federspeicherbremszylinders 5 ausgebildet, von dieser einen Abstand von 0,1 mm bis 0,3 mm (in Fig.4 beispielsweise 0,3 mm) auf. Weiterhin erstrecken sich die Kontaktflächen 50 der Verriegelungssegmente 37 des Federspeicherbremszylinders 5 in einem Abstand von 2,1 mm bis 2,3 mm (in Fig.4 beispielsweise 2,3 mm) von der nach radial innen weisenden Umfangsfläche 51 des Rands 35 der Wandung 31 des Federspeicherbremszylinders 5 gemessen bis zu einer nach radial außen weisenden Umfangsfläche 63 der Verriegelungssegmente 37. Nicht zuletzt beträgt die Länge der Verriegelungssegmente in Axialrichtung gesehen ungefähr 9,8 mm. Gemäß einer weiteren, hier nicht gezeigten Ausführungsform weist die Stirnfläche 57 des Rands 35 der Wandung 31 keine Ausnehmung auf und bildet dann mit einem radial äußeren Abschnitt selbst die Kontaktfläche 50 aus.

Die Ringdichtung 55 ist im Querschnitt knochenartig ausgebildet, mit wulstartig ausgeformten Endabschnitten 65 und 71 sowie mit einem demgegenüber eingeschnürten Mittelabschnitt 69.

Vor diesem Hintergrund wird der Bajonettverschluss 33 ausgehend von der in Fig.2 gezeigten Ausgangslage, in welcher die Zwischenwand 7 koaxial mit dem Federspeicherbremszylinder 5 ausgerichtet ist wie folgt verriegelt bzw. geschlossen: Zunächst wird die Ringdichtung 55 an der nach radial innen weisenden Umfangsfläche 53 der Ringkammer 43 und insbesondere ihr Endabschnitt 65 in der Ausnehmung 61 im Boden 59 der Ringkammer 43 positioniert. Die Ringdichtung 55 bzw. ihr Endabschnitt 65 ist hierzu mit einem entsprechenden Innendurchmesser versehen. Sodann wird der endseitige Rand 35 der Wandung 31 des Federspeicherbremszylinders 5 in die Ringkammer 43 der Zwischenwand 7 translatorisch eingeführt, wie der Pfeil 1 in Fig. 2 symbolisiert.

Dabei werden die Verriegelungssegmente 37 des Federspeicherbremszylinders 5 in die korrespondierenden Ausnehmungssegmente 45 der Zwischenwand bzw. die Verriegelungssegmente 47 der Zwischenwand 7 in die korrespondierenden Ausnehmungssegmente 39 des Federspeicherbremszylinders 5 translatorisch, d.h. koaxial mit der Mittelachse 67 des Kombizylinders 1 eingeführt, bis die stirnseitigen Kontaktflächen 50 der Verriegelungssegmente 37 des Federspeicherbremszylinders 5 die zugeordnete bodenseitige Anschlagfläche 49 der Ringkammer 43 kontaktieren. Dabei wird der Endabschnitt 65 der Ringdichtung 55 zwischen der Ausnehmung 61 im Boden 59 der Ringkammer 43 und der Stirnfläche 57 des endseitigen Rands 35 der Wandung 31 des Federspeicherbremszylinders 5axial geklemmt. Dabei verbleibt aber für den Endabschnitt 65 der Ringdichtung 55 noch soviel axialer Raum zwischen der Ausnehmung 61 im Boden 59 der Ringkammer 43 und der Stirnfläche 57 des endseitigen Rands 35 der Wandung 31 des Federspeicherbremszylinders 5, dass diese nicht aus der gewünschten und in Fig.3 gezeigten Lage gedrängt oder beschädigt wird.

Andererseits wird dabei aber auch der andere, vom Boden 59 der Ringkammer 43 weg weisende Endabschnitt 71 der Ringdichtung 55 in radialer Richtung elastisch komprimiert und zwischen der nach radial innen weisenden Umfangsfläche 51 des Rands 35 der Wandung 31 des Federspeicherbremszylinders 5 und der nach radial außen weisenden Umfangsfläche 53 der Ringkammer 43 der Zwischenwand 7 geklemmt.

Schließlich werden gemäß Pfeil 2 in Fig.2 Federspeicherspeicherbremszylinder 5 und Zwischenwand 7 gegeneinander derart verdreht, dass die nach radial außen vorspringenden Verriegelungssegmente 37 des Federspeicherbremszylinders 5 die nach radial innen vorspringenden Verriegelungssegmente 47 der Zwischenwand 7 innerhalb der Ringkammer 43 formschlüssig hintergreifen. Dabei bzw. danach federt der Rand 37 des Federspeicherbremszylinders bedingt durch die elastischen Federkräfte des axial geklemmten und komprimierten Endabschnitts 65 der Ringdichtung 55 in axialer Richtung etwas aus der Ringkammer 43 aus, so dass im verriegelten Zustand des Bajonettverschlusses 33 die Kontaktflächen 50 der Verriegelungssegmente 37 des Federspeicherbremszylinders 5 von der Anschlagfläche 49 am Boden 59 der Ringkammer 43 um ein Stück axial beabstandet sind und der Formschluss zwischen den Verriegelungssegmenten 37, 47 zustande kommen kann bzw. aufrecht erhalten wird. Damit bleibt der Bajonettverschluss 33 unter Spannung. Weiterhin wird ein Entriegeln des Bajonettverschlusses durch zwei hier nicht gezeigte Sicherungsstifte verhindert. Dieser Zustand ist in Fig.3 gezeigt. Damit ist der Bajonettverschluss 33 verriegelt.

Die elastische Kompression der Ringdichtung 55 in radialer Richtung zwischen der nach radial innen weisenden Umfangsfläche 51 des Rands 35 der Wandung 31 des Federspeicherbremszylinders 5 und der nach radial außen weisenden Umfangsfläche 53 der Ringkammer 43 der Zwischenwand 7 sorgt andererseits für eine Abdichtung und für einen Kraftschluss, der ein Lösen des Bajonettverschlusses 33 behindert, wie anhand von Fig.3 leicht vorstellbar ist.

### Bezugszahlenliste

- 1: Kombizylinder
- 3: Betriebsbremszylinder
- 5: Federspeicherbremszylinder
- 7: Zwischenwand
- 9: Kolben
- 11: Speicherfeder
- 13: Boden
- 15: Druckkammer
- 17: Federkammer
- 19: Kolbenstange
- 21: Druckkammer
- 23: Dichtung
- 24: Einlass
- 25: Membrane
- 27: Membranteller
- 29: Druckstange
- 30: Kammer
- 31: Wandung
- 33: Bajonettverschluss
- 35: Rand
- 37: Verriegelungssegmente
- 39: Ausnehmungssegmente
- 41: Rand
- 43: Ringkammer
- 45: Ausnehmungssegmente
- 47: Verriegelungssegmente
- 49: Anschlagfläche
- 50: Kontaktflächen
- 51: Umfangsfläche
- 53: Umfangsfläche
- 55: Ringdichtung
- 57: Stirnfläche
- 59: Boden
- 61: Ausnehmung
- 63: Umfangsfläche
- 65: Endabschnitt
- 67: Mittelachse
- 69: Mittelabschnitt
- 71: Endabschnitt

## Patentansprüche

1. Kombinierter Betriebsbrems- und Federspeicherbremszylinder (1) für Bremsanlagen von Fahrzeugen, insbesondere Nutzfahrzeugen, mit
a) einem oder einer im Betriebsbremszylinder (3) angeordneten, durch ein Druckmittel betätigbare(n) Betriebsbremskolben oder Betriebsbremsmembrane (25, 27), welcher oder welche mit einer aus dem Betriebsbremszylinder (3) ragenden, auf Bremsbetätigungselemente einwirkenden Betriebsbremskolbenstange (29) in Wirkverbindung steht,
b) einem im Federspeicherbremszylinder (5) angeordneten, durch eine Speicherfeder (11) betätigbaren Federspeicherbremskolben (9), welcher auf einer Seite von einer Druckkammer (15) und auf der entgegen gesetzten Seite von einer die Speicherfeder (11) aufnehmenden Federkammer (17) begrenzt ist, wobei sich die Speicherfeder (11) einerseits am Federspeicherbremskolben (9) und andererseits am Boden (13) des Federspeicherbremszylinders (5) abstützt,
c) einer Zwischenwand (7) zwischen Betriebsbremszylinder (3) und Federspeicherbremszylinder (5), durch welche sich eine mit dem Federspeicherbremskolben (9) verbundene Federspeicherbremskolbenstange (19) erstreckt,
d) einem Bajonettverschluss (33) zwischen dem Federspeicherbremszylinder (5) und der Zwischenwand (7), welcher an einem endseitigen Rand (35) der Wandung (31) des Federspeicherbremszylinders (5) nach radial außen vorspringende Verriegelungssegmente (37) und nach radial innen ausgeformte Ausnehmungssegmente (39) sowie hierzu korrespondierende, an einer mit der Zwischenwand (7) verbundenen Ringkammer (43) ausgebildete, nach radial außen ausgeformte Ausnehmungssegmente (45) sowie in die Ringkammer (43) nach radial innen vorspringende Verriegelungssegmente (47) aufweist,
e) einer bodenseitigen Anschlagfläche (49) in der Ringkammer (43) als axialer Anschlag für den endseitigen Rand (35) der Wandung (31) des Federspeicherbremszylinders (5),
f) einer zwischen der nach radial innen weisenden Umfangsfläche (51) des Rands (35) der Wandung (31) des Federspeicherbremszylinders (5) und der nach radial außen weisenden Umfangsfläche (53) der Ringkammer (43) angeordneten Ringdichtung (55), **dadurch gekennzeichnet, dass**
g) eine Ausnehmung (61) im Boden (59) der Ringkammer (43) zur Aufnahme wenigstens eines Endabschnitts (65) der Ringdichtung (43), sowie
h) an den Verriegelungssegmenten (37) des Federspeicherbremszylinders (5) stirnseitige Kontaktflächen (50) zum Anschlag an der bodenseitigen Anschlagfläche (49) in der Ringkammer (43) vorgesehen sind, wobei
i) wenigstens der Endabschnitt (65) der Ringdichtung (55) zwischen der Ausnehmung (61) im Boden (59) der Ringkammer (43) und dem Rand (35) der Wandung (31) des Federspeicherbremszylinders (5) geklemmt ist.

2. Kombinierter Betriebsbrems- und Federspeicherbremszylinder nach Anspruch 1, **dadurch gekennzeichnet, dass** sich die Kontaktflächen (50) der Verriegelungssegmente (37) des Federspeicherbremszylinders (5) über den gesamten Segmentbogen erstrecken und als axiale Ausnehmungen in einer Stirnfläche (57) des endseitigen Rands (35) der Wandung (31) des Federspeicherbremszylinders (5) ausgebildet, von dieser einen Abstand von 0,1 bis 0,3 mm aufweisen.

3. Kombinierter Betriebsbrems- und Federspeicherbremszylinder nach Anspruch 2, **dadurch gekennzeichnet, dass** die Kontaktflächen (50) der Verriegelungssegmente (37) des Federspeicherbremszylinders (5) in einem Abstand von 2,1 mm bis 2,3 mm von der nach radial innen weisenden Umfangsfläche (51) des Rands (35) der Wandung (31) des Federspeicherbremszylinders (5) gemessen sich bis zu der nach radial außen weisenden Umfangsfläche (63) der Verriegelungssegmente (37) erstrecken.

4. Kombinierter Betriebsbrems- und Federspeicherbremszylinder nach einem der vorhergehenden Ansprüche, **dadurch gekennzeichnet, dass** die bodenseitige Anschlagfläche (49) in der Ringkammer (43) in Bezug zu der Ausnehmung (61) im Boden (59) der Ringkammer (43) radial außen angeordnet ist bzw. sich dieser radial außen anschließt.

5. Kombinierter Betriebsbrems- und Federspeicherbremszylinder nach einem der vorhergehenden Ansprüche, **dadurch gekennzeichnet, dass** die Ringkammer (43) mit der Zwischenwand (7) einstückig ausgebildet ist.

6. Kombinierter Betriebsbrems- und Federspeicherbremszylinder nach einem der vorhergehenden Ansprüche, **dadurch gekennzeichnet, dass** die Ringdichtung (55) im Querschnitt knochenartig ausgebildet ist, mit wulstartig ausgeformten Endabschnitten (65, 71) sowie mit einem demgegenüber eingeschnürten Mittelabschnitt (69).

7. Kombinierter Betriebsbrems- und Federspeicherbremszylinder nach Anspruch 6, **dadurch gekennzeichnet, dass** der andere Endabschnitt (71) der Ringdichtung (55) in radialer Richtung zwischen einer nach radial innen weisenden Umfangsfläche (51) des Rands (35) der Wandung (31) des Federspeicherbremszylinders (5) und einer nach radial außen weisenden Umfangsfläche (53) der Ringkammer (43) der Zwischenwand (7) elastisch geklemmt ist.

8. Verfahren zur Herstellung des kombinierten Betriebsbrems- und Federspeicherbremszylinders (1) nach einem der vorhergehenden Ansprüche, **gekennzeichnet durch** folgende Schritte:
a) Positionieren der Ringdichtung (55) an der nach radial innen weisenden Umfangsfläche (53) der Ringkammer (43) und des Endabschnitts (65) der Ringdichtung (55) in der Ausnehmung (61) im Boden (59) der Ringkammer (43),
b) translatorisches Einführen des endseitigen Rands (35) der Wandung (31) des Federspeicherbremszylinders (5) in die Ringkammer (43) der Zwischenwand (7) unter Einführen der Verriegelungssegmente (37, 47) in die korrespondierenden Ausnehmungssegmente (39, 45) bis zum Kontakt der stirnseitigen Kontaktflächen (50) der Verriegelungssegmente (37) des Federspeicherbremszylinders (5) mit der zugeordneten bodenseitigen Anschlagfläche (49) der Ringkammer (43) unter Klemmen wenigstens des Endabschnitts (65) der Ringdichtung (55) zwischen der Ausnehmung (61) im Boden (59) der Ringkammer (43) und dem endseitigen Rand (35) der Wandung (31) des Federspeicherbremszylinders (5),
c) Verdrehen von Federspeicherspeicherbremszylinder (5) und Zwischenwand (7) gegeneinander derart, dass die nach radial außen vorspringenden Verriegelungselemente (37) des Federspeicherbremszylinders (5) die nach radial innen vorspringenden Verriegelungselemente (47) der Zwischenwand (7) innerhalb der Ringkammer (43) formschlüssig hintergreifen.

## Claims

1. Combined service brake and spring brake cylinder (1) for brake systems of vehicles, in particular commercial vehicles, comprising
a) a service brake piston or service brake diaphragm (25, 27), which is located in the service brake cylinder (3) and actuable by a pressure fluid and which is operationally connected to a service brake piston rod (29) projecting from the service brake cylinder (3) and acting on actuating elements,
b) a spring brake piston (9), which is located in the spring brake cylinder (5) and actuable by an accumulator spring (11) and which is bounded by a pressure chamber (15) on one side and by a spring chamber (17) accommodating the accumulator spring (11) on the other side, the accumulator spring (11) being supported on the spring brake piston (9) on the one hand and on the base (13) of the spring brake cylinder (5) on the other hand,
c) a partition (7) between the service brake cylinder (3) and the spring brake cylinder (5), through which a spring brake piston rod (19) connected to the spring brake piston (9) extends,
d) a bayonet lock (33) between the spring brake cylinder (5) and the partition (7), which bayonet lock (33) comprises locking elements (37) projecting radially outwards at an end edge (35) of the wall (31) of the spring brake cylinder (5) as well as radially inward-formed recess segments (39) and corresponding radially outward-formed recess segments (45) formed on an annular chamber (43) connected to the partition (7) and locking segments (47) projecting radially inwards into the annular chamber (43),
e) a base-side stop face (49) in the annular chamber (43) as an axial stop of the end edge (35) of the wall (31) of the spring brake cylinder (5),
f) a ring seal (55) arranged between the radially inward-oriented circumferential surface (51) of the edge (35) of the wall (31) of the spring brake cylinder (5) and the radially outward-oriented circumferential surface (53) of the annular chamber (43), **characterised in that**
g) a recess (61) is provided in the base (59) of the annular chamber (43) for the accommodation of at least an end section (65) of the ring seal (55), and
h) end-face contact surfaces (50) are provided on the locking elements (37) of the spring brake cylinder (5) for contacting the base-side stop face (49) in the annular chamber (43), wherein
i) at least the end section (65) of the ring seal (55) is clamped between the recess (61) in the base (59) of the annular chamber (43) and the edge (35) of the wall (31) of the spring brake cylinder (5).

2. Combined service brake and spring brake cylinder according to claim 1, **characterised in that** the contact surfaces (50) of the locking elements (37) of the spring brake cylinder (5) extend across the whole segment arc and, being represented by axial recesses in an end face (57) of the end-side edge (35) of the wall (31) of the spring brake cylinder (5), have a distance of 0.1 to 0.3 mm therefrom.

3. Combined service brake and spring brake cylinder according to claim 2, **characterised in that** the contact surfaces (50) of the locking elements (37) of the spring brake cylinder (5), measured at a distance of 2.1 to 2.3 mm from the radially inward-oriented circumferential surface (51) of the edge (35) of the wall (31) of the spring brake cylinder (5), extend to the radially outward-oriented circumferential surface (63) of the locking segments (37).

4. Combined service brake and spring brake cylinder according to any of the preceding claims, **characterised in that** the base-side stop face (49) in the annular chamber (43) is arranged radially outward relative to the recess (61) in the base (59) of the annular chamber (43) or adjoins it radially on the outside.

5. Combined service brake and spring brake cylinder according to any of the preceding claims, **characterised in that** the annular chamber (43) is designed in one piece with the partition (7).

6. Combined service brake and spring brake cylinder according to any of the preceding claims, **characterised in that** the ring seal (55) is bone-shaped in cross-section, having end sections (65, 71) of a bead shape and a central section (69) which is constricted compared thereto.

7. Combined service brake and spring brake cylinder according to any of the preceding claims, **characterised in that** the other end section (71) of the ring seal (55) is elastically clamped in the radial direction between a radially inward-oriented circumferential surface (51) of the edge (35) of the wall (31) of the spring brake cylinder (5) and a radially outward-oriented circumferential surface (53) of the annular chamber (43) of the partition (7).

8. Method for producing the combined service brake and spring brake cylinder (1) according to any of the preceding claims, **characterised by** the following steps:
a) the positioning of the ring seal (55) on the radially inward-oriented circumferential surface (53) of the annular chamber (43) and the positioning of the end section of the ring seal (55) in the recess (61) in the base,(59) of the annular chamber (43),
b) the translational introduction of the end-face edge (35) of the wall (31) of the spring brake cylinder (5) into the annular chamber (43) of the partition (7) while introducing the locking segments (37, 47) into the corresponding recess segments (39, 45) until the end-face contact surfaces (50) of the locking elements (37) of the spring brake cylinder (5) contact the associated base-side stop surface (49) of the annular chamber (43) while at least the end section (65) of the ring seal (55) is clamped between the recess (61) in the base (59) of the annular chamber (43) and the end-face edge (35) of the wall (31) of the spring brake cylinder (5),
c) the twisting of the spring brake cylinder (5) and of the partition (7) relative to one another in such a way that the radially outward-projecting locking elements (37) of the spring brake cylinder (5) engage the radially inward-projecting locking elements (47) of the partition (7) positively from behind within the annular chamber (43).

## Revendications

1. Cylindre (1) combiné de frein de service et de frein à ressort accumulateur pour des systèmes de freinage de véhicules, notamment de véhicules utilitaires, comprenant
a) un piston de frein de service ou une membrane (25, 27) de frein de service, qui est monté dans un cylindre (3) de frein de service, qui peut être actionné par un moyen d'application d'une pression et qui est en liaison d'action avec une tige (29) de piston de frein de service dépassant du cylindre (3) de frein de service et agissant sur des éléments d'actionnement de frein,
b) un piston (9) de frein à ressort accumulateur, qui est monté dans le cylindre (5) de frein à ressort accumulateur, qui peut être actionné par un ressort (11) accumulateur et qui est délimité d'un côté par une chambre (15) de pression et du côté opposé par une chambre (17) de ressort recevant le ressort (11) accumulateur, le ressort (11) accumulateur s'appuyant, d'une part, sur le piston (9) de frein à ressort accumulateur et, d'autre part, sur le fond (13) du cylindre (5) de frein à ressort accumulateur,
c) une paroi (7) intermédiaire entre le cylindre (3) de frein et le cylindre (5) de frein à ressort accumulateur, à travers laquelle passe une tige (19) du piston de frein à ressort accumulateur reliée au piston (9) de frein à ressort accumulateur,
d) une fermeture (33) à baïonnette entre le cylindre (5) de frein à ressort accumulateur et la paroi (7) intermédiaire, fermeture qui, sur un bord (35) du côté de l'extrémité de la paroi (31) du cylindre (5) de frein à ressort accumulateur, a des éléments (37) de verrouillage faisant saillie radialement vers l'extérieur et des segments (39) d'évidement conformés radialement vers l'intérieur, ainsi que des segments (45) d'évidement y correspondant formés sur une chambre (43) annulaire reliée à la paroi (7) intermédiaire et formés radialement vers l'extérieur, ainsi que des segments (47) de verrouillage faisant saillie radialement vers l'intérieur dans la chambre (43) annulaire,
e) une surface (49) de butée du côté du fond dans la chambre (43) annulaire comme butée axiale pour le bord (35) du côté de l'extrémité de la paroi (31) du cylindre (5) de frein à ressort accumulateur,
f) un joint (55) torique disposé entre la surface (51) périphérique tournée radialement vers l'intérieur du bord (35) de la paroi (31) du cylindre (5) de frein à ressort accumulateur et la surface (53) périphérique tournée radialement vers l'extérieur de la chambre (43) annulaire, **caractérisé en ce que**
g) il est prévu un évidement (61) dans le fond (59) de la chambre (43) annulaire pour la réception d'au moins un tronçon (65) d'extrémité du joint (43) torique, ainsi que
h) sur les segments (37) de verrouillage du cylindre (5) de frein à ressort accumulateur, des surfaces (50) de contact du côté frontal pour buter sur la surface (49) de butée du côté du fond dans la chambre (43) annulaire, dans lequel
i) au moins le tronçon (65) d'extrémité du joint (55) torique est serré entre l'évidement (61) au fond (59) de la chambre (43) annulaire et le bord (35) de la paroi (31) du cylindre (5) de frein à ressort accumulateur.

2. Cylindre combiné de frein de service et de frein à ressort accumulateur suivant la revendication 1, **caractérisé en ce que** les surfaces (50) de contact des segments (37) de verrouillage du cylindre (5) de frein à ressort accumulateur s'étendent sur tout l'arc de segment et, en étant constituées sous la forme d'évidements axiaux dans une surface (57) frontal du bord (35) du côté de l'extrémité de la paroi (31) du cylindre (5) de frein à ressort accumulateur, sont à une distance de celui-ci de 0,1 à 0,3 mm.

3. Cylindre combiné de frein de service et de frein à ressort accumulateur suivant la revendication 2, **caractérisé en ce que** les surfaces (50) de contact des segments (37) de verrouillage du cylindre (5) de frein à ressort accumulateur sont à une distance de 2,1 mm à 2,3 mm de la surface (51) périphérique tournée radialement vers l'intérieur du bord (35) de la paroi (31) du cylindre (5) de frein à ressort accumulateur, mesurée jusqu'à la surface (63) périphérique tournée radialement vers l'extérieur des segments (37) de verrouillage.

4. Cylindre combiné de frein de service et de frein à ressort accumulateur suivant l'une des revendications précédentes, **caractérisé en ce que** la surface (49) de butée du côté du fond dans la chambre (43) annulaire est disposée, par rapport à l'évidement (61) au fond (59) de la chambre (43) annulaire, à l'extérieur radialement ou s'y raccorde à l'extérieur radialement.

5. Cylindre combiné de frein de service et de frein à ressort accumulateur suivant l'une des revendications précédentes, **caractérisé en ce que** la chambre (43) annulaire est constituée d'une seule pièce avec la paroi (7) intermédiaire.

6. Cylindre combiné de frein de service et de frein à ressort accumulateur suivant l'une des revendications précédentes, **caractérisé en ce que** le joint (55) torique est constitué en section transversale à la manière d'un os ayant des tronçons (65, 71) d'extrémité de type en bourrelet, ainsi qu'un tronçon (69) médian resserré par rapport à ceux-ci.

7. Cylindre combiné de frein de service et de frein à ressort accumulateur suivant la revendication 6, **caractérisé en ce que** l'autre tronçon (71) d'extrémité du joint (55) torique est serré élastiquement dans la direction radiale entre une surface (51) périphérique tournée radialement vers l'intérieur du bord (35) de la paroi (31) du cylindre (5) de frein à ressort accumulateur et une surface (53) périphérique tournée radialement vers l'extérieur de la chambre (43) annulaire de la paroi (7) intermédiaire.

8. Procédé de fabrication du cylindre (1) combiné de frein de service et de frein à ressort accumulateur suivant l'une des revendications précédentes, **caractérisé par** les stades suivantes :
a) mise en position du joint (55) torique sur la surface (53) périphérique tournée radialement vers l'intérieur de la chambre (43) annulaire et du tronçon (65) d'extrémité du joint (55) torique dans l'évidement (61) au fond (59) de la chambre (43) annulaire,
b) introduction en translation du bord (35) du côté de l'extrémité de la paroi (31) du cylindre (5) de frein à ressort accumulateur dans la chambre (43) annulaire de la paroi (7) intermédiaire en introduisant les segments (37, 47) de verrouillage dans les segments (39, 45) d'évidement correspondants jusqu'au contact des surfaces (50) de contact du côté frontal des segments (37) de verrouillage du cylindre (5) de frein à ressort accumulateur avec les surfaces (49) de butée du côté du fond associées de la chambre (43) annulaire avec serrage au moins du tronçon (65) d'extrémité du joint (55) torique entre l'évidement (61) au fond (59) de la chambre (43) annulaire et le bord (35) du côté de l'extrémité de la paroi (31) du cylindre (5) de frein à ressort accumulateur,
c) rotation du cylindre (5) de frein à ressort accumulateur et de la paroi (7) intermédiaire l'un par rapport à l'autre, de manière à ce que les éléments (37) de verrouillage faisant saillie radialement vers l'extérieur du cylindre (5) de frein à ressort accumulateur s'accrochent à complémentarité de forme derrière les éléments (47) de verrouillage en saillie radialement vers l'intérieur de la paroi (7) intermédiaire dans la chambre (43) annulaire.
